# EUROPÄISCHE PATENTANMELDUNG

(11) **EP 3 628 533 A1**
(43) Veröffentlichungstag der Anmeldung: **01.04.2020**
(21) Anmeldenummer: 19000389.7
(22) Anmeldetag: 29.08.2019
(51) Int. Cl.: B60L 53/18, B60L 53/302, B60L 53/30, H01B 7/42

(54) **FLÜSSIGKEITSGEKÜHLTER KABELAUFBAU UND VERFAHREN ZUM KÜHLEN EINES KABELAUFBAUS**

(30) Priorität: 24.09.2018 DE 102018123455
(71) Anmelder: HARTING Automotive GmbH, 32339 Espelkamp (DE)
(72) Erfinder: Beimdieck, Carsten, 49477 Ibbenbüren (DE); Frerking, Malte, 49448 Brockum (DE)

(57) **Zusammenfassung**

Die Erfindung betrifft einen flüssigkeitsgekühlten Kabelaufbau mit mindestens zwei Kabeln (2), die jeweils eine Kühlflüssigkeitsleitung (3), mehrere um die jeweilige Kühlflüssigkeitsleitung (3) herum angeordnete elektrische Leiter (4) und einen Kabelmantel (5) umfassen. Eine Außenhülle (50) umgibt die mindestens zwei Kabel (2). Mindestens ein Kühlflüssigkeitsschlauch (10) ist innerhalb der Außenhülle (50) und außerhalb der Kabel (2) angeordnet. Zudem wird ein entsprechendes Verfahren zum Kühlen eines Kabelaufbaus beschrieben.

## Beschreibung

Die Erfindung geht aus von einem flüssigkeitsgekühlten Kabelaufbau nach dem Oberbegriff des unabhängigen Anspruchs 1. Die Erfindung betrifft weiterhin ein Verfahren zum Kühlen eines Kabelaufbaus nach dem Oberbegriff des Anspruchs 11.

Ein derartiger flüssigkeitsgekühlter Kabelaufbau umfasst mindestens zwei Kabel, die jeweils eine Kühlflüssigkeitsleitung, mehrere um die jeweilige Kühlflüssigkeitsleitung herum angeordnete elektrische Leiter und einen Kabelmantel umfassen. Eine Außenhülle umgibt die mindestens zwei Kabel. Ein solcher Kabelaufbau wird insbesondere zur Übertragung hoher Ströme, beispielsweise in Ladesteckverbindern, eingesetzt.

In entsprechender Weise umfasst der Kabelaufbau bei einem gattungsgemäßen Verfahren zum Kühlen eines Kabelaufbaus mindestens zwei Kabel, die jeweils eine Kühlflüssigkeitsleitung, mehrere um die jeweilige Kühlflüssigkeitsleitung herum angeordnete elektrische Leiter und einen Kabelmantel umfassen, und eine Außenhülle, welche die mindestens zwei Kabel umgibt.

Insbesondere für Elektrofahrzeuge sind große Ladeströme gewünscht, damit ein Ladevorgang einer Batterie ähnlich schnell erfolgen kann wie das Betanken eines Fahrzeugs mit Verbrennungsmotor. Hohe Ladeströme führen jedoch zu starken Hitzeentwicklungen am Kabel und am Steckverbinder.

### Stand der Technik

Die DE 10 2016 112 306 A1 zeigt einen Kabelaufbau, bei dem elektrische Kontaktelemente eines Steckverbinders flüssigkeitsgekühlt sind. Jedes Kabel umfasst einen Kabelmantel, in dem eine mittige Kühlflüssigkeitsleitung angeordnet ist, welche von mehreren Kupferadern umgeben ist. Eine flüssigkeitsdichte Folie umgibt die Kupferadern, so dass zwischen der Folie und dem Kabelmantel eine äußere Flüssigkeitsleitung bereitgestellt wird. Kühlflüssigkeit wird nun in der äußeren Flüssigkeitsleitung zum elektrischen Kontaktelement hin geleitet und in der mittigen Flüssigkeitsleitung zurück geleitet.

Abmessungen der mittigen und der äußeren Flüssigkeitsleitung sind für einen hinreichend großen Kühlflüssigkeitsstrom gewählt. Hieraus resultiert ein verhältnismäßig großer Kabelquerschnitt, was die Handhabung erschwert.

Aus CN 106 782 835 A ist ein Kabelaufbau bekannt, bei dem innerhalb einer Außenhülle zwei Kabel angeordnet sind, die jeweils eine Kühlflüssigkeitsleitung, darum angeordnete elektrische Leiter und einen Kabelmantel umfassen. Die Kühlflüssigkeitsleitungen sind Zuleitungen zu einem Steckverbinder. Hingegen bewerkstelligen außerhalb der Kabelmantel angeordnete Schläuche den Rückfluss der Kühlflüssigkeit.

US 2012/0199390 A1 beschreibt einen Kabelaufbau mit drei Kabeln, die jeweils mittig eine Kühlflüssigkeitsleitung umfassen. Zudem ist eine weitere Kühlflüssigkeitsleitung in dem Bereich zwischen den drei Kabeln gebildet.

Aus DE 10 2016 105 347 A1 geht ein Kabelaufbau hervor, bei dem innerhalb einer Außenhülle zwei Kabel aufgenommen sind, die jeweils eine Kühlmittelleitung aufweisen, welche von einem jeweiligen elektrischen Leiter umgeben ist. Diese Kühlmittelleitungen bilden einen Zufluss von Kühlflüssigkeit zu einem steckerseitigen Kabelende hin. Zudem sind innerhalb der Außenhülle zwei Kühlmittelschläuche vorhanden, welche einen Rückfluss der Kühlflüssigkeit bereitstellen.

### Aufgabenstellung

Eine Aufgabe der Erfindung besteht darin, einen flüssigkeitsgekühlten Kabelaufbau und ein Verfahren zum Kühlen eines Kabelaufbaus anzugeben, welche eine effiziente Kühlung bei möglichst einfacher Handhabung bereitstellen.

Die Aufgabe wird durch den flüssigkeitsgekühlten Kabelaufbau mit den Merkmalen des unabhängigen Anspruchs 1 sowie durch das Verfahren mit den Merkmalen des Anspruchs 11 gelöst.

Vorteilhafte Ausgestaltungen der Erfindung sind in den Unteransprüchen und der folgenden Beschreibung angegeben.

Erfindungsgemäß ist bei dem flüssigkeitsgekühlten Kabelaufbau der oben genannten Art mindestens ein Kühlflüssigkeitsschlauch innerhalb der Außenhülle, das heißt in dem von der Außenhülle umschlossenen Raum, und außerhalb der Kabel angeordnet.

In entsprechender Weise wird bei dem vorgenannten Verfahren erfindungsgemäß eine Kühlflüssigkeit durch die Kühlflüssigkeitsleitungen und durch mindestens einen Kühlflüssigkeitsschlauch befördert, der innerhalb der Außenhülle und außerhalb der Kabel angeordnet ist.

Indem nicht sowohl der Zu- und Rückfluss der Kühlflüssigkeit innerhalb eines der Kabel integriert sind, kann der Querschnitt der Kabel reduziert werden. Dadurch ist die Biegesteifigkeit verringert und die Handhabung wird erleichtert. Der Gesamtdurchmesser, das heißt der Durchmesser der Außenhülle des Kabelaufbaus, wird maßgeblich durch die Durchmesser der beiden aufgenommenen Kabel bestimmt. Indem in jedem Kabel nur der Rückfluss aufgenommen ist, wird der Gesamtdurchmesser im . Vergleich zu herkömmlichen Kabelaufbauten kleiner. Die entsprechend andere mindestens eine Leitung für den Zufluss der Kühlflüssigkeit kann neben den Kabeln angeordnet sein, womit der Gesamtdurchmesser der Außenhülle nicht vergrößert wird. Im Vergleich zu einem herkömmlichen Kabelaufbau, bei dem sowohl der Zu- als auch der Rückfluss von Kühlflüssigkeit innerhalb eines Kabels integriert ist, kann bei der Erfindung bei gleich großen Strömungsquerschnitten für Kühlflüssigkeit ein kleinerer Gesamtdurchmesser verwirklicht werden. Insbesondere kann vorgesehen sein, dass innerhalb der Kabel jeweils nur eine einzige Kühlflüssigkeitsleitung angeordnet ist.

Die Kühlflüssigkeitsleitungen innerhalb der Kabel bilden einen Rückfluss von Kühlflüssigkeit weg von einem Anschlussstück/Steckverbinder, während der mindestens eine Kühlflüssigkeitsschlauch einen Zufluss von Kühlflüssigkeit in Richtung des Steckverbinders bildet. Ein Großteil der abzuführenden Wärme entsteht an elektrischen Kontakten, zu denen die Kabel hinführen. Die Kühlflüssigkeit sollte daher an den elektrischen Kontakten möglichst kühl sein. Die elektrischen Leiter der Kabel erwärmen die Kühlflüssigkeitsleitungen innerhalb der Kabel stärker als den mindestens einen Kühlflüssigkeitsschlauch. Indem dieser den Zufluss bildet, kann daher kühlere Kühlflüssigkeit an den elektrischen Kontakten bereitgestellt werden, als im Fall, dass die Kühlflüssigkeitsleitungen innerhalb der Kabel den Zufluss bilden würden.

An einem Ende der Außenhülle ist ein Steckverbinder verbunden, wobei der Zufluss als Richtung zum Steckverbinder hin definiert ist und der Rückfluss die entgegengesetzte Richtung kennzeichnet. Es kann eine Pumpe oder eine andere Flüssigkeitsbeförderungsvorrichtung vorgesehen und dazu eingerichtet sein, Kühlflüssigkeit entlang des mindestens einen Kühlflüssigkeitsschlauchs zum Steckverbinder hin und entlang der Kühlflüssigkeitsleitungen vom Steckverbinder weg zu befördern. Für die Kühlflüssigkeit kann über den Steckverbinder ein geschlossener Kreislauf bereitgestellt werden. Zur Steuerung der Pumpe kann eine entsprechend eingerichtete elektronische Steuereinheit vorgesehen sein. An einer vom Steckverbinder entfernten Stelle kann am Kreislauf ein Wärmetauscher zum Abgeben von Wärme vorhanden sein.

Im Steckverbinder kann eine Fluidverbindung zwischen dem mindestens einen Kühlflüssigkeitsschlauch und den Kühlflüssigkeitsleitungen hergestellt sein. Hierzu kann ein Hohlraum im Steckverbinder gebildet sein, welcher fluidisch mit dem mindestens einen Kühlflüssigkeitsschlauch und beiden Kühlflüssigkeitsleitungen verbunden ist und im Übrigen fluiddicht ist.

Es kann bevorzugt sein, dass zwei oder mehr Kühlflüssigkeitsschläuche vorhanden sind. Diese können nebeneinander angeordnet sein, insbesondere einander berührend, und im Wesentlichen parallel zueinander verlaufend. Zwei Kühlflüssigkeitsschläuche bieten große Gestaltungsvariationen hinsichtlich der Fluidverbindung innerhalb des Steckverbinders zu den beiden Kühlflüssigkeitsleitungen in den Kabeln. Hingegen kann ein einziger Kühlflüssigkeitsschlauch vorteilhaft sein, um bei gleichem Strömungsquerschnitt kompaktere Bauformen zu ermöglichen. Zu diesem Zweck kann der einzige Kühlflüssigkeitsschlauch so innerhalb der Außenhülle angeordnet sein, dass er beide Kabel berührt.

Im Fall von zwei Kühlflüssigkeitsschläuchen kann einer von diesen im Steckverbinder mit einer der Kühlflüssigkeitsleitungen fluidisch verbunden sein, während der andere der beiden Kühlflüssigkeitsschläuche im Steckverbinder mit der anderen der beiden Kühlflüssigkeitsleitungen fluidisch verbunden ist. Hierdurch können zwei, insbesondere separate, Flüssigkeitskreisläufe bereitgestellt werden. Dies erlaubt unter anderem eine effiziente Kühlung von räumlich voneinander entfernten Teilen des Steckverbinders. Dabei können die beiden Flüssigkeitskreisläufe an einem dem Steckverbinder gegenüberliegenden Ende miteinander verbunden sein. So kann eine einzige Pumpe zum Befördern der Kühlflüssigkeit durch beide Kühlflüssigkeitsschläuche genügen.

Innerhalb der Außenhülle können auch mehrere Steuerleitungen aufgenommen sein, welche frei verlaufen können, das heißt ohne gemeinsame Hülle, welche die Steuerleitungen von anderen Leitungen und Kabeln trennen würde. Indem die Steuerleitungen frei verlaufen, können Lücken zwischen oder neben den Kabeln und Kühlflüssigkeitsschläuchen raumeffizient genutzt werden. Zudem ist die Handhabung erleichtert, da die Biegesteifigkeit durch das Verzichten auf eine gemeinsame Hülle nicht erhöht ist.

Die beiden Kabel können nebeneinander innerhalb der Außenhülle angeordnet sein. Der mindestens eine Kühlflüssigkeitsschlauch kann nun auf einer Seite der beiden Kabel innerhalb der Außenhülle angeordnet sein, während ein Schutzleiter, der eine Erdung bereitstellt, auf einer gegenüberliegenden Seite der beiden Kabel angeordnet ist. Der Gesamtdurchmesser der Außenhülle kann mit dieser Anordnung durch die beiden Kabel bestimmt sein, während der Schutzleiter und der mindestens eine Kühlflüssigkeitsschlauch den Gesamtdurchmesser nicht vergrößern, oder den Durchmesser, der durch die beiden nebeneinander liegenden Kabeln definiert ist, nur geringfügig vergrößern, beispielsweise um höchstens 10% oder 20%.

Ein Innendurchmesser von einem der Kabelmantel kann gerade dem Durchmesser der darin aufgenommenen Kühlflüssigkeitsleitung plus dem Durchmesser von zwei aufgenommenen elektrischen Leitern entsprechen. Diese schlanke Gestaltung, bei der insbesondere nicht mehrere Flüssigkeitsleitungen im Kabelmantel eingeschlossen sind, erlaubt eine einfache Handhabung und insgesamt kompakte Anordnungen.

Der Kabelmantel eines Kabels soll als äußere Begrenzung des Kabels verstanden werden und kann beispielsweise ein Schlauch oder ein extrudierter Mantel sein. Die im Kabelmantel aufgenommenen elektrischen Leiter können metallische Adern, insbesondere Kupferadern, sein. Sie können in direktem Kontakt mit einer Außenseite der Kühlflüssigkeitsleitung und mit einer Innenseite des Kabelmantels stehen. Die Adern können konzentrisch um die jeweilige Kühlflüssigkeitsleitung herum angeordnet sein. Die Kühlflüssigkeitsleitungen können durch beispielsweise flexible Schläuche gebildet sein.

Die Außenhülle, welche die Kabel, den mindestens einen Kühlflüssigkeitsschlauch und weitere Komponenten wie beispielsweise einen Schutzleiter und Steuerleitungen umgibt, kann ein Schlauch, ein Rohr oder ein extrudierter Mantel sein. Im Fall eines extrudierten Mantels können auch Füllelemente, wie zum Beispiel Fasern, innerhalb des extrudierten Mantels ergänzt sein. Als Kühlflüssigkeit kann eine beliebige Flüssigkeit, beispielsweise Wasser, eine wässrige Lösung, ein Öl oder ein ölhaltiges Gemisch, verwendet werden. Prinzipiell kann die Flüssigkeit auch durch ein Fluid, insbesondere auch einen Dampf oder ein Gas, ersetzt sein.

Der mindestens eine Kühlflüssigkeitsschlauch ist neben den Kabeln angeordnet, was insbesondere heißt, dass ein Kabel nicht etwa innerhalb von einem Kühlflüssigkeitsschlauch angeordnet ist. Im Fall von zwei Kühlflüssigkeitsschläuchen können beide den gleichen Querschnitt haben. Dieser kann wiederum gleich sein wie die Querschnitte der Kühlflüssigkeitsleitungen innerhalb der Kabel. Wird nur ein einziger Kühlflüssigkeitsschlauch verwendet, kann dieser einen größeren Querschnitt haben als eine der Kühlflüssigkeitsleitungen. Der Querschnitt des einzigen Kühlflüssigkeitsschlauchs kann kleiner als die Summe beider Querschnitte der Kühlflüssigkeitsleitungen sein, da bei dem großen Querschnitt des Kühlflüssigkeitsschlauchs eine reibungsbedingte Verringerung der Strömungsgeschwindigkeit an der Wand des Kühlflüssigkeitsschlauchs eine vergleichsweise geringere Bedeutung hat.

Der erfindungsgemäße Kabelaufbau ist besonders für Ladesteckverbinder geeignet, die beispielsweise zum Laden der Batterien von Elektroautos eingesetzt werden. Prinzipiell ist der Kabelaufbau aber auch für im Wesentlichen beliebige Anwendungen geeignet, bei denen eine Kühlung der elektrischen Leiter in den Kabeln und/oder der elektrischen Verbindungen im oder am Steckverbinder gewünscht ist.

Durch den bestimmungsgemäßen Gebrauch der beschriebenen Ausführungsformen des Kabelaufbaus der Erfindung ergeben sich Varianten des erfindungsgemäßen Verfahrens.

### Ausführungsbeispiele

Ausführungsbeispiele der Erfindung sind in den Zeichnungen dargestellt und werden im Folgenden näher erläutert. Es zeigen:
- Fig. 1: einen Querschnitt eines Kabelaufbaus;
- Fig. 2: eine perspektivische Schnittdarstellung des Kabelaufbaus aus Fig. 1;
- Fig. 3: einen Querschnitt eines weiteren Kabelaufbaus und
- Fig. 4: eine perspektivische Schnittdarstellung des Kabelaufbaus aus Fig. 3.

Die Figuren enthalten teilweise vereinfachte, schematische Darstellungen. Gleiche Elemente sind in der Regel mit übereinstimmenden Bezugszeichen gekennzeichnet.

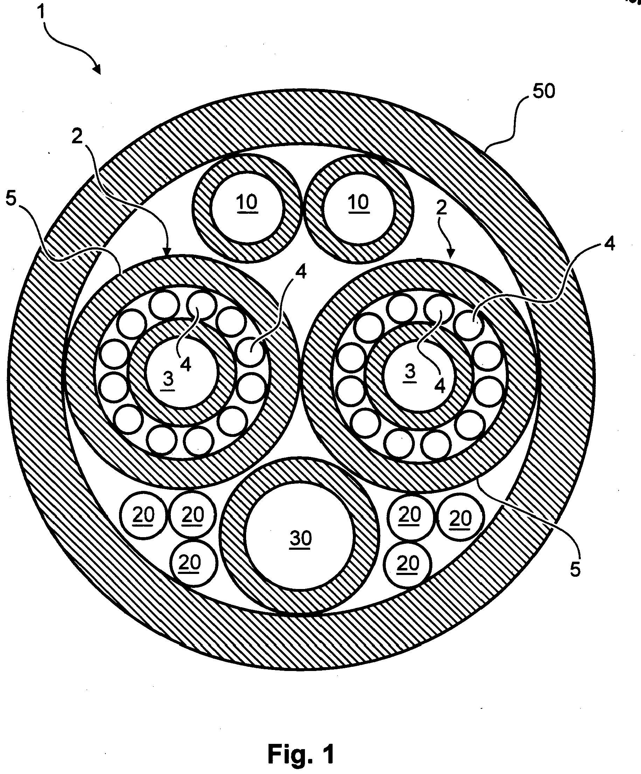

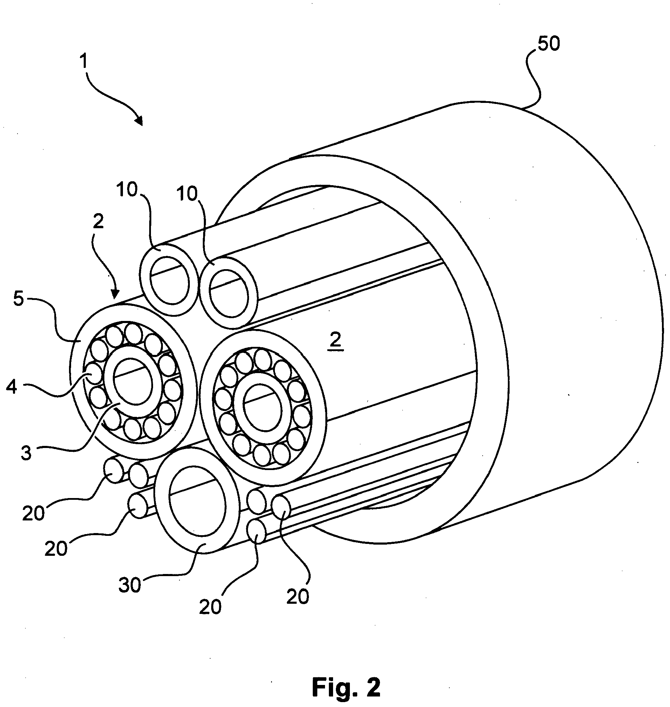

Ein erstes Ausführungsbeispiel eines flüssigkeitsgekühlten Kabelaufbaus 1 gemäß der Erfindung wird mit Bezug auf die Figuren 1 und 2 beschrieben. Die Figur 1 zeigt einen Querschnitt des Kabelaufbaus 1, während Figur 2 eine perspektivische Schnittansicht des Kabelaufbaus 1 zeigt.

Der Kabelaufbau 1 umfasst eine Außenhülle 50, welche mindestens zwei Kabel 2 umgibt. Jedes Kabel 2 enthält eine zentrale Kühlflüssigkeitsleitung 3, welche beispielsweise als Schlauch gebildet sein kann. Dieser wird von mehreren elektrischen Leitern 4, beispielsweise Kupferadern, umgeben. Radial nach außen werden die Kupferadern von einem Kabelmantel 5 umschlossen. Die beiden Kabelmantel 5 der zwei Kabel 2 können einander berührend nebeneinander angeordnet sein.

Um einen Zu- und Rückfluss von Kühlflüssigkeit bereitzustellen, ist außerdem mindestens ein Kühlflüssigkeitsschlauch 10 innerhalb der Außenhülle 50 vorhanden. Im Beispiel von Fig. 1 sind zwei Kühlflüssigkeitsschläuche 10 vorhanden, wobei prinzipiell auch eine andere Anzahl möglich ist. Die Kühlflüssigkeitsschläuche 10 ermöglichen einen Zufluss von Kühlflüssigkeit zu einem nicht dargestellten Steckverbinder, während die in den Kabeln 2 enthaltenen Kühlflüssigkeitsleitungen 3 einen Rückfluss vom Steckverbinder weg bilden. Durch die Kühlflüssigkeit sollen elektrische Kontakte im Steckverbinder sowie die elektrischen Leitungen 4 gekühlt werden. Um eine möglichst starke Kühlung der elektrischen Kontakte im Steckverbinder bereitzustellen, kann es vorteilhaft sein, dass die Kühlflüssigkeitsschläuche 10 den Zufluss bilden, da diese schwächer von den elektrischen Leitern 4 erhitzt werden als die Kühlflüssigkeitsleitungen 3.

Indem die Kühlflüssigkeitsschläuche 10 neben den Kabeln 2 angeordnet sind, kann der Gesamtdurchmesser der Außenhülle 50 kleiner ausfallen, als wenn in jedem Kabel 2 sowohl der Zufluss als auch der Rückfluss von Kühlflüssigkeit bereitgestellt wäre.

Für eine raumeffiziente Anordnung können die beiden Kühlflüssigkeitsschläuche 10 einander berühren und jeder Kühlflüssigkeitsschlauch 10 berührt einen der Kabelmäntel 5. Die beiden Kühlflüssigkeitsschläuche 10 sind somit auf derselben Seite bezüglich einer Verbindungsgeraden der Mittelpunkte der beiden Kabel 2 angeordnet, während ein Schutzleiter 30, der ebenfalls innerhalb der Außenhülle 50 vorhanden ist, auf der anderen Seite bezüglich dieser Verbindungsgeraden angeordnet ist.

Es können auch mehrere weitere nicht zu kühlende Leitungen, im dargestellten Beispiel mehrere Steuerleitungen 20, vorhanden sein. Diese können in den Zwischenräumen zwischen den Kabeln 2, den Kühlflüssigkeitsschläuchen 10 und dem Schutzleiter 30 verteilt sein. Wie dargestellt, können zum Beispiel einige der Steuerleitungen 20 auf einer Seite des Schutzleiters 30 und andere der Steuerleitungen 20 auf der gegenüberliegenden Seite des Schutzleiters 30 angeordnet sein.

Der Innendurchmesser der Außenhülle 50 kann durch diese Anordnung gerade den beiden Durchmessern der Kabel 2 entsprechen. Die übrigen Komponenten führen nicht oder kaum zu einer Vergrößerung des Innendurchmessers.

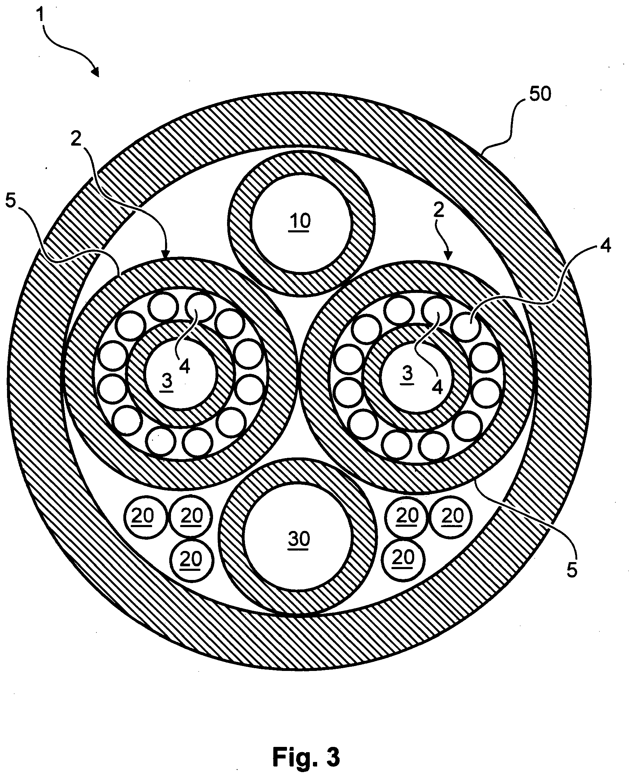

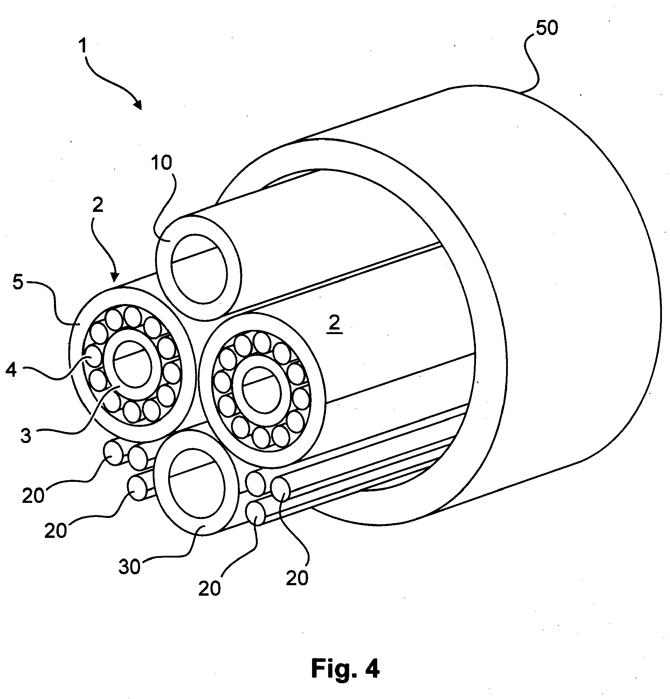

Eine Abwandlung der Ausführungsform der Figuren 1 und 2 ist in den Figuren 3 und 4 gezeigt. Hierbei zeigt Figur 3 einen Querschnitt der in Figur 4 perspektivisch dargestellten Kabelanordnung 1.

Die Kabelanordnung 1 der Figuren 3 und 4 unterscheidet sich vom Ausführungsbeispiel der Figuren 1 und 2 darin, dass anstelle von zwei Kühlflüssigkeitsschläuchen 10 bloß ein einziger Kühlflüssigkeitsschlauch 10 vorhanden ist. Dieser Kühlflüssigkeitsschlauch 10 ist in einem nicht dargestellten Steckverbinder fluidisch mit beiden Kühlflüssigkeitsleitungen 3 verbunden.

Durch die in den Figuren dargestellte Gestaltung kann vorteilhafterweise ein verhältnismäßig kleiner Durchmesser der Kabel 2 erreicht werden, womit die Handhabung verbessert und die Biegsamkeit erhöht werden kann. Dabei ist der Aufbau vergleichsweise einfach in der Herstellung.

### Bezugszeichenliste

- 1: Kabelaufbau
- 2: Kabel
- 3: Kühlflüssigkeitsleitung
- 4: Elektrische Leiter
- 5: Kabelmantel

- 10: Kühlflüssigkeitsschlauch
- 20: Steuerleitungen
- 30: Schutzleiter
- 50: Außenhülle

## Patentansprüche

1. Flüssigkeitsgekühlter Kabelaufbau, aufweisend:
- einen Steckverbinder,
- mindestens zwei Kabel (2), die jeweils eine Kühlflüssigkeitsleitung (3), mehrere um die jeweilige Kühlflüssigkeitsleitung (3) herum angeordnete elektrische Leiter (4) und einen Kabelmantel (5) aufweisen,
- eine Außenhülle (50), welche die mindestens zwei Kabel (2) umgibt, und
- mindestens einen Kühlflüssigkeitsschlauch (10), der innerhalb der Außenhülle (50) und außerhalb der Kabel (2) angeordnet ist,
**dadurch gekennzeichnet, dass**
der mindestens eine Kühlflüssigkeitsschlauch (10) einen Zufluss von Kühlflüssigkeit zum Steckverbinder bildet und
die Kühlflüssigkeitsleitungen (3) innerhalb der Kabel (2) einen Rückfluss von Kühlflüssigkeit weg vom Steckverbinder bilden.

2. Flüssigkeitsgekühlter Kabelaufbau nach Anspruch 1,
**dadurch gekennzeichnet, dass**
innerhalb der Kabel (2) jeweils nur eine einzige Kühlflüssigkeitsleitung (3) angeordnet ist.

3. Flüssigkeitsgekühlter Kabelaufbau nach einem der vorstehenden Ansprüche,
**dadurch gekennzeichnet, dass**
ein Innendurchmesser der Außenhülle (50) gerade den Durchmessern der Kabel (2) zusammengenommen entspricht.

4. Flüssigkeitsgekühlter Kabelaufbau nach einem der vorstehenden Ansprüche,
**dadurch gekennzeichnet, dass**
eine Pumpe vorhanden und dazu eingerichtet ist, Kühlflüssigkeit entlang des mindestens einen Kühlflüssigkeitsschlauchs (10) zum Steckverbinder hin und entlang der Kühlflüssigkeitsleitungen (3) vom Steckverbinder weg zu befördern.

5. Flüssigkeitsgekühlter Kabelaufbau nach einem der vorstehenden Ansprüche,
**dadurch gekennzeichnet, dass**
im Steckverbinder eine Fluidverbindung zwischen dem mindestens einen Kühlflüssigkeitsschlauch (10) und den Kühlflüssigkeitsleitungen (3) hergestellt ist.

6. Flüssigkeitsgekühlter Kabelaufbau nach einem der vorstehenden Ansprüche,
**dadurch gekennzeichnet, dass**
dass der mindestens eine Kühlflüssigkeitsschlauch (10) zwei Kühlflüssigkeitsschläuche (10) aufweist.

7. Flüssigkeitsgekühlter Kabelaufbau nach vorstehendem Anspruch,
**dadurch gekennzeichnet, dass**
im Steckverbinder einer der Kühlflüssigkeitsschläuche (10) mit einer der Kühlflüssigkeitsleitungen (3) fluidisch verbunden ist und im Steckverbinder ein anderer der Kühlflüssigkeitsschläuche (10) mit einer anderen der Kühlflüssigkeitsleitungen (3) fluidisch verbunden ist.

8. Flüssigkeitsgekühlter Kabelaufbau nach einem der vorstehenden Ansprüche,
**dadurch gekennzeichnet, dass**
mehrere Steuerleitungen (20) frei innerhalb der Außenhülle (50) angeordnet sind.

9. Flüssigkeitsgekühlter Kabelaufbau nach einem der vorstehenden Ansprüche,
**dadurch gekennzeichnet, dass**
die zwei Kabel (2) nebeneinander innerhalb der Außenhülle (50) angeordnet sind,
der mindestens eine Kühlflüssigkeitsschlauch (10) auf einer Seite der zwei Kabel (2) innerhalb der Außenhülle (50) angeordnet ist und
ein Schutzleiter (30) auf einer gegenüberliegenden Seite der zwei Kabel (2) angeordnet ist.

10. Flüssigkeitsgekühlter Kabelaufbau nach einem der vorstehenden Ansprüche,
**dadurch gekennzeichnet, dass**
ein Innendurchmesser von einem der Kabelmantel (5) gerade dem Durchmesser der darin aufgenommenen Kühlflüssigkeitsleitung (3) plus dem doppelten Durchmesser von einem der aufgenommenen elektrischen Leiter (4) entspricht.

11. Verfahren zum Kühlen eines Kabelaufbaus, welcher
- einen Steckverbinder,
- mindestens zwei Kabel (2), die jeweils eine Kühlflüssigkeitsleitung (3), mehrere um die jeweilige Kühlflüssigkeitsleitung (3) herum angeordnete elektrische Leiter (4) und einen Kabelmantel (5) aufweisen, und
- eine Außenhülle (50), welche die mindestens zwei Kabel (2) umgibt,
aufweist,
**dadurch gekennzeichnet, dass**
eine Kühlflüssigkeit durch mindestens einen Kühlflüssigkeitsschlauch (10), der innerhalb der Außenhülle (50) und außerhalb der Kabel (2) angeordnet ist, zum Steckverbinder hin befördert wird, und durch die Kühlflüssigkeitsleitungen (3) zurück vom Steckverbinder weg befördert wird.
